(19)

Europäisches
Patentamt
European
Patent Office
Office européen
des brevets

(11) **EP 4 495 147 A1**

(12) **EUROPEAN PATENT APPLICATION**

(43) Date of publication:
**22.01.2025 Bulletin 2025/04**

(21) Application number: **23186527.0**

(22) Date of filing: **19.07.2023**

(51) International Patent Classification (IPC):
*C08F 210/06* (2006.01)  *C08F 8/50* (2006.01)
*B33Y 10/00* (2015.01)  *B33Y 70/00* (2020.01)
*B29C 64/118* (2017.01)  *B33Y 80/00* (2015.01)

(52) Cooperative Patent Classification (CPC):
(C-Sets available)
**B33Y 70/00; C08F 8/50;** B29C 64/118; B33Y 10/00
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Lummus Novolen Technology GmbH
68165 Mannheim (DE)**

(72) Inventor: **RAENTZSCH, Volker Andreas
68165 Mannheim (DE)**

(74) Representative: **Kraus & Lederer PartGmbB
Thomas-Wimmer-Ring 15
80539 München (DE)**

(54) **PROPYLENE POLYMERS FOR THREE-DIMENSIONAL PRINTING**

(57)    A propylene copolymer composition and method are described. The propylene copolymer composition includes a propylene copolymer of propylene from 70 to 95 wt% and at least two α-olefin comonomers from 3.0 to 25 wt%. The α-olefin comonomer with a lower molar mass may be included from 0.3 to 10 wt%. The propylene copolymer composition may have a melt flow rate (MFR) in a range from 5.4 to 250 g/10 min, a polydispersity index (PI) in a range from 1.0 to 3.7, an analytical temperature rising elution fractionation full width at half maximum (ATREF FWHM) in a range from 1.0 to 15.4 °C, and a dimensional accuracy of at least 88.5% when 3D-printed using a die temperature of 190 °C. The method includes reacting propylene and at least two α-olefin comonomers in one or more vertically-stirred gas phase reactors, extruding with additives, and optionally visbreaking to produce a propylene copolymer composition.

**EP 4 495 147 A1**

(52) Cooperative Patent Classification (CPC): (Cont.)

C-Sets
**C08F 210/06, C08F 2/34;**
**C08F 210/06, C08F 4/651;**
C08F 210/06, C08F 210/16, C08F 210/08,
C08F 2500/03, C08F 2500/12, C08F 2500/37,
C08F 2500/27

**Description**

FIELD OF THE DISCLOSURE

Embodiments disclosed herein relate generally to a propylene copolymer composition for three-dimensional (3D) printing applications. In more specific embodiments, embodiments disclosed herein relate to a propylene copolymer including at least two α-olefin comonomers and the use of this material for 3D printing applications.

BACKGROUND

Additive Manufacturing (colloquially referred to as 3D printing technology) is one of the fastest growing applications for polymers. There are currently four major different methods for the additive manufacturing of polymers, including fused filament fabrication (FFF), Arburg Plastic Freeforming (APF), stereolithography (SLA), and selective laser sintering (SLS).

The SLA process requires a liquid plastic resin, a photopolymer, which is then cured by an ultraviolet (UV) laser. The SLA machine requires an excess amount of photopolymer to complete the print, and a common g-code format may be used to translate a CAD model into assembly instructions for the printer. An SLA machine typically stores the excess photopolymer in a tank below the print bed, and as the print process continues, the bed is lowered into the tank, curing consecutive layers along the way. Due to the smaller cross-sectional area of the laser, SLA is considered one of the slower additive fabrication methods, as small parts may take hours or even days to complete. Additionally, the material costs are relatively higher, due to the proprietary nature and limited availability of the photopolymers.

The SLS process is similar to SLA, forming parts layer by layer through use of a high energy pulse laser. In SLS, however, the process starts with a tank full of bulk material in powder form. As the print continues, the bed lowers itself for each new layer, advantageously supporting overhangs of upper layers with the excess bulk powder not used in forming the lower layers. To facilitate processing, the bulk material is typically heated to just under its transition temperature to allow for faster particle fusion and print moves, such as described in US5648450. SLS requires large facilities for safe handling of plastic powders, and is therefore not suited to be used in home or professional desktop applications.

Fused filament fabrication (FFF) and Arburg Plastic Freeforming (APF) are examples of processes for 3D printing by material extrusion. Rather than using a laser to form polymers or sinter particles together, these processes work by extruding and laying down consecutive layers of materials at high temperature, allowing the adjacent layers to cool and bond together before the next layer is deposited. FFF processes typically feed a continuous polymer filament to a print head, melting, extruding, and printing the polymer to form the part. APF generally refers to the processes feeding a polymer in powder, flake, or pellet form to a print head, melting, extruding and printing the polymer in droplets to form the 3D part, such as described in EP2739460.

The desktop and home 3D printing markets, and also the professional and industrial applications using FFF or APF, are dominated by PLA (polylactic acid), PETG (polyethylene terephthalate glycol), ABS (acrylonitrile butadiene styrene), PC (polycarbonate), and PA (polyamide) as the printed medium.

Polypropylene, which has a lower cost, and a lower density (leading to a lower weight of the printed part) would be a desirable material of choice, but current technology disfavors the use of polypropylene. The drawbacks of currently used polypropylene grades are the lower tensile modulus, poorer print bed adhesion, higher shrinkage, and higher warpage compared to PLA, PETG, ABS, PC, and PA.

In most 3D printing technologies, engineered plastics are used due to their excellent properties in tensile modulus, print bed adhesion, shrinkage, and warpage. In comparison to these high cost engineered plastics, polypropylene generally shows slight drawbacks in the mechanical properties, but shows advantages in low temperature printing, density, formation of odorous components (e.g., volatile organic compounds (VOC)).

The prior art practice using polypropylene for direct 3D printing is either a cross-linked material, which requires, beside a peroxide, an additional linking agent, such as a diene in CN103980402 or a silane in CN103497414. Due to poor extrusion capability or even impossible extrudability, the cross-linking process is in most cases made after the printing process, so both patent applications describe the use of the polymer for the widespread SLS technology. A cross-linked polypropylene existing out of an interconnected network showing this very poor extrudability makes a filament production, required for FFF technology, nearly impossible. The poor extrudability inhibits also the use for the APF technology.

GB2515348 discloses a special polypropylene which is flexible at room temperature condition for the production of soft and flexible objects which deform under gravity. Such polymers are not desirable for a large number of applications.

CN104211876 and CN104031316 focus on complex composite compounds of polypropylene with either high loads of starch, oxysilane, microspheres and toughening agents. This further complicates the manufacturing process and increases costs, which are generally not desired.

US 2012/0070619 describes a consumable filament for use in an extrusion-based additive manufacturing system, where the consumable filament comprises a first portion of a first semi-crystalline polymeric material, and a second portion of a second semi-crystalline polymeric material, and where the second semi-crystalline polymeric material has a crystallization temperature that is greater than a crystallization temperature of the first semi-crystalline polymeric material.

## SUMMARY OF THE DISCLOSURE

This summary is provided to introduce a selection of concepts that are further described below in the detailed description. This summary is not intended to identify key or essential features of the claimed subject matter, nor is it intended to be used as an aid in limiting the scope of the claimed subject matter.

In one aspect, embodiments disclosed herein relate to a propylene copolymer composition which includes a propylene copolymer of propylene, in a range from 70 to 95 percent by weight (wt%), and at least two $\alpha$-olefin comonomers, in a range from 3.0 to 25 wt%. The at least two $\alpha$-olefin comonomers may be selected from a group of ethylene, 1-butylene, 1-pentene, 1-hexene, 1-heptene, and 1-octene. The $\alpha$-olefin comonomer with a lower molar mass may be included in a range from 0.3 to 10 wt%. The propylene copolymer composition may have a melt flow rate (MFR) in a range from 5.4 to 250 g/10 min, a polydispersity index (PI) in a range from 1.0 to 3.7, an analytical temperature rising elution fractionation full width at half maximum (ATREF FWHM) in a range from 1.0 to 15.4 °C, and a dimensional accuracy of at least 88.5% when 3D-printed using a die temperature of 190 °C.

In another aspect, embodiments disclosed herein relate to a method of making a propylene copolymer composition including reacting propylene and at least two $\alpha$-olefin comonomers in one or more vertically-stirred gas phase reactors to produce a propylene copolymer. The method may further include extruding the propylene copolymer with additives and optionally visbreaking to produce a propylene copolymer composition. The produced propylene copolymer composition may have has a melt flow rate (MFR) in a range from 5.4 to 250 g/10 min, a polydispersity index (PI) in a range from 1.0 to 3.7, an analytical temperature rising elution fractionation full width at half maximum (ATREF FWHM) in a range from 1.0 to 15.4 °C, and a dimensional accuracy of at least 88.5% when 3D-printed using a die temperature of 190 °C.

Other aspects and advantages of the claimed subject matter will be apparent from the following description and the appended claims.

## BRIEF DESCRIPTION OF DRAWINGS

FIG. 1 illustrates a fused filament fabrication (FFF) system useful to print articles in accordance with embodiments herein.

FIG. 2 illustrates a 3D printed test specimen for determining the tensile modulus in accordance with embodiments herein.

FIG. 3 illustrates a 3D printed test specimen for determining dimensional accuracy in accordance with embodiments herein.

FIG. 4 illustrates a 3D printed test specimen for determining the relative warpage in accordance with embodiments herein.

FIG. 5 is a bar chart comparing tensile modulus in accordance with embodiments herein.

FIG. 6 is a graph comparing ATREF FWHM in accordance with embodiments herein.

## DETAILED DESCRIPTION

Fused filament fabrication (FFF) and Arburg Plastic Freeforming (APF), as noted above, are methods of rapid prototyping. The process works by laying down consecutive layers of material at high temperatures, allowing the adjacent layers to cool and bond together before the next layer is deposited.

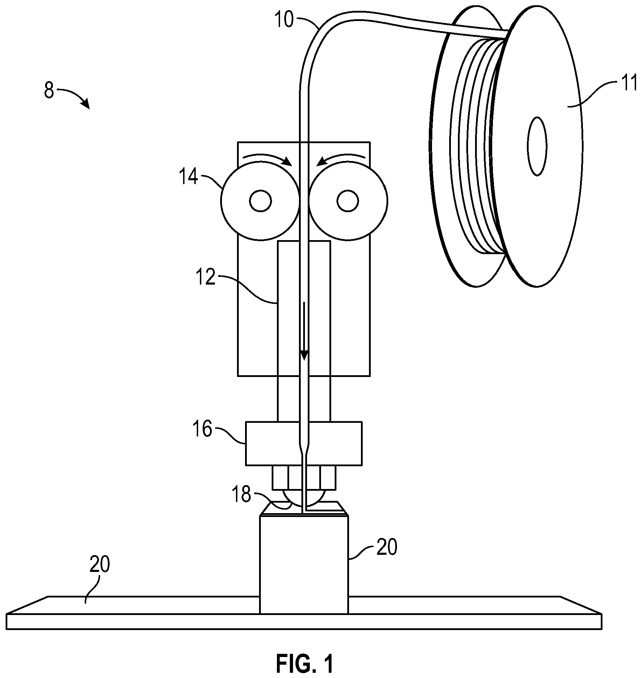

Referring to FIG. 1, during the fused filament fabrication process, a filament 10 may be fed from a spool 11 to an extruder 12. The extruder may use torque and a pinch system 14 to feed and retract the filament as needed. A heater block 16 melts the filament at an appropriate temperature, and the heated filament is forced out of the heated die 18, laying down the extruded material 20 where it is needed. The print head 8 and/or the bed 20 may be moved to the correct *xyz* position for placing the material as the printing process proceeds.

While described with respect to a particular type of fused filament fabrication process and illustrating a single spool, those of skill in the art will appreciate that there are many different types of fused filament fabrication systems, many of which may include multiple spools and multiple print heads. Likewise, one skilled in the art may appreciate that Arburg Plastic Freeforming systems, such as those that may use pellets or flakes of polymer, may similarly extrude and print a polymer into a three-dimensional object.

Embodiments herein relate to a propylene copolymer composition and the use of this composition for FFF and APF 3D printing applications (i.e., embodiments of the disclosure provide for a 3D printing grade polymer having desirable characteristics suitable for use in FFF and APF). The FFF and APF printing technologies use in principle the same printing process, the laying down of molten polymer beads/droplets, but differ in how the polymer is fed into the 3D printer. In FFF technology, filaments pre-extruded from the polymer are introduced into the 3D printer, whereas APF is using polymer pellets originated directly from the polymer or compounding plant. The 3D printing propylene copolymer composition shows improved tensile properties and dimensional accuracy, as compared to existing compositions. The improvement of these attributes corresponds to the propylene copolymer composition having higher melt flow rates, narrower molecular weight distributions, narrower chemical composition distributions, and higher crystallinities than existing compositions.

PROPYLENE COPOLYMER COMPOSITION

In one aspect, embodiments disclosed herein relate to propylene copolymers. The propylene copolymers may include propylene as a majority monomer. In some embodiments, propylene may be included in a range of 75 to 95 percent by weight (wt%). The propylene copolymer may further include at least two $\alpha$-olefin comonomers. The at least two $\alpha$-olefin comonomers may be selected from a group including ethylene, 1-butylene, 1-pentene, 1-hexene, 1-heptene, and 1-octene. In some embodiments, the comonomers include ethylene and 1-butylene. The propylene copolymer may contain a total amount of the at least two $\alpha$-olefin comonomers in a range from 3.0 to 25 wt%. In other embodiments, the total amount of the at least two $\alpha$-olefin comonomers may be 4.0 to 22 wt%, 5.2 to 20 wt%, 6.0 to 15 wt%, 6.5 to 14 wt%, 7.0 to 13 wt%, 7.5 to 12 wt%, 8.1 to 11 wt%, 8.5 to 10.5 wt%, 9.1 to 10 wt%, or 9.2 to 9.9 wt%.

Of the at least two $\alpha$-olefin comonomers, the $\alpha$-olefin comonomer having the lowest molar mass may be present in the propylene copolymer in an amount of 0.3 to 10 wt%. In one or more embodiments, the $\alpha$-olefin comonomer with the lowest molar mass may be present in the propylene copolymer in an amount from 0.5 to 8.0 wt%, 1.0 to 6.0 wt%, 1.5 to 5.0 wt%, 1.6 to 4.0 wt%, 1.7 to 3.9 wt%, 1.8 to 3.8 wt%, 1.9 to 3.7 wt%, 2.0 to 3.6 wt%, 2.1 to 3.5 wt%, 2.2 to 3.4 wt%, or 2.3 to 3.3 wt%. In one or more embodiments, the $\alpha$-olefin comonomer with the lowest molar mass is ethylene.

Of the at least two $\alpha$-olefin comonomers, the $\alpha$-olefin comonomer having the highest molar mass may be present in the propylene copolymer in an amount of 3.0 to 20 wt%, where the total content of the at least two $\alpha$-olefin comonomers is not greater than the ranges of amounts as described above. In one or more embodiments, the $\alpha$-olefin comonomer with the highest molar mass may be present in the propylene copolymer in an amount from 3.5 to 18 wt%, 4.0 to 15 wt%, 4.5 to 12 wt%, 5.0 to 10 wt%, or 6.5 to 8.5 wt%, where the total content of the at least two $\alpha$-olefin comonomers is not greater than the ranges of amounts as described above. In one or more embodiments, the $\alpha$-olefin comonomer with the highest molar mass is 1-butylene.

Propylene copolymer compositions according to embodiments herein may include the above described propylene copolymer and one or more additives. In some embodiments, the additives may be included in a range from 0.01 to 5 wt%. In other embodiments, the one or more additives may be included in a range from 0.02 to 4 wt%, 0.03 to 3 wt%, 0.04 to 2 wt%, or 0.05 to 1 wt%.

According to one or more embodiments, the one or more additives may be selected from a group of stabilizers, acid scavengers, nucleating agents, antistatic agents, slip agents, antiblocking agents, and combinations thereof.

According to one or more embodiments, the one or more additives may include stabilizers. The stabilizers may comprise any suitable stabilizers known in the art. Nonlimiting examples of stabilizers may include phosphites (e.g., BASF IRGAFOS 168), phosphonites (e.g., CLARIANT HOSTANOX P-EPQ), sterically hindered phenols (e.g., BASF IRGANOX 1010, IRGANOX 1076, IRGANOX 1330, IRGANOX 3114), hindered amines (e.g., BASF TINUVIN 622), and thiodipropionates (e.g., BASF IRGANOX PS 802 FL).

According to one or more embodiments, the one or more additives may contain acid scavengers. The acid scavengers may comprise any suitable acid scavengers known in the art. The acid scavengers may be selected from a group comprising metallic stearates, hydrotalcites, hydrocalumites, metallic oxides, metallic carbonates, and combinations thereof. For example, the metallic stearates may comprise calcium stearate and zinc stearate. For example, the hydrotalcites may comprise $Mg_{4.3}Al_2(OH)_{12.6}CO3 \cdot mH_2O$ (DHT). For example, the hydrocalumites may comprise $[Ca_2Al(OH)_6]OH \cdot mH_2O$, $[Ca_2Al(OH)_6]CO_3 \cdot mH_2O$, $[Ca_2Al(OH)_6]HPO_3 \cdot mH_2O$, $[Ca_2Al(OH)_6]SO_4 \cdot mH_2O$, $[Ca_2Al(OH)_6]Cl \cdot mH_2O$ and combinations thereof. For example, the metallic oxides may comprise zinc oxide, calcium oxide, magnesium oxide and combinations thereof. For example, the metallic carbonates may comprise zinc carbonate, calcium carbonate, magnesium carbonate and combinations thereof.

According to one or more embodiments, the one or more additives may include nucleating agents. The nucleating agents may comprise any suitable nucleating agents known in the art. For example, the nucleating agents may include talc, sodium benzoate, 1,2,3-tridesoxy-4,6:5,7-bis-O-[(4-propylphenyl) methylene]nonitol, 1,3:2,4-bis(3,4-dimethylbenzylidene)sorbitol, 1,2-cyclohexane dicarboxylic acid metal salts, bicyclo [2.2.1] heptane- 2,3-dicarboxylic acid metal salts, 2,2'-methylene-bis-(4,6-di-te/t-butylphenyl) phosphate metal salts, 2,2'-methylene-bis-(4,6-di-te/t-butylphenyl) benzoate metal salts, or hydroxy-bis(2,2'-methylene-bis(4,6-di-tert-butylphenyl)phosphate metal salts, where the metal ions can be selected from, for example, lithium, aluminium, sodium, calcium, magnesium. Commercial examples may include Milliken HPN-600ei / HPN-68L / HPN-20E / HPN-715, Adeka NA-11 / NA-21 / NA-71 / NA-27.

According to one or more embodiments, the one or more additives may include antistatic agents. The antistatic agents may comprise any suitable antistatic agents known in the art. The antistatic agents may include glycerol monostearates (GMS-55, GMS-90) or ethoxylated alkyl amines.

According to one or more embodiments, the one or more additives may include slip agents. The slip agents may comprise any suitable slip agent known in the art. The slip agents may include erucamides and oleamides.

According to one or more embodiments, the one or more additives may include antiblocking agents. The antiblocking agents may comprise any suitable antiblocking agents known in the art. The antiblocking agents may include silica.

Embodiments of the present disclosure may include a 3D printed article of the propylene copolymer composition. The 3D printed article may be printed according to any known method in the art. The 3D printed article may include articles printed using fused filament fabrication (FFF), Arburg Plastic Freeforming (APF), stereolithography (SLA), or selective laser sintering (SLS).

The propylene copolymer composition may have a melt mass-flow rate (MFR). The melt mass-flow rate may be determined in accordance with standard method ISO 1133 at 230 °C and a load of 2.16 kg. In one or more embodiments, the propylene copolymer composition may have a MFR in a range from 5.4 to 250 grams per 10 minutes (g/10 min). In other embodiments, the propylene copolymer composition may have a MFR in a range from 5.5 to 200 g/10 min, 6.0 to 180 g/lOmin, 7.0 to 150 g/lOmin, 8.0 to 120 g/10 min, 10 to 100 g/10 min, 16 to 90 g/10 min, 21 to 75 g/10 min, 30 to 60 g/10 min, or 35 to 43 g/10 min.

The propylene copolymer composition may have a polydispersity index (PI). The PI may be correlated to the molecular weight distribution of the propylene copolymer composition. In the present description and the following claims, the PI may be determined as follows. Rheological oscillatory frequency sweep experiments may be performed on compression-molded disks using a parallel-plate geometry at 210 °C, oscillatory strain amplitude $\gamma_0$ = 10%, angular frequency $\omega$ = 389 to 0.1 rad/s, and a DHR- 2 rheometer (TA Instruments, New Castle, USA). The storage modulus G' and loss modulus G" data may be analyzed by performing a least squares polynomial fit: $\ln(G') = a_2 \times [\ln(G")]^2 + a_1 \times \ln(G") + a_0$. The cross-over modulus Gc may be calculated from the fit parameters by:

$$G_C = exp\left[\frac{1 - a_1 + \sqrt{(a_1 - 1)^2 - 4a_2a_0}}{2a_2}\right]$$

The PI may be calculated from the calculated cross-over modulus Gc:

$$PI = \frac{10^5 Pa}{G_C}$$

In one or more embodiments, the propylene copolymer composition may have a PI in a range from 1.0 to 3.7. In other embodiments, the propylene copolymer composition may have a PI in a range from 1.2 to 3.6, 1.5 to 3.4, 1.7 to 3.0, 1.8 to 2.7, or 1.9 to 2.5.

A measure of the crystallinity of the propylene copolymer composition may include an enthalpy of fusion ($\Delta H_f$). The $\Delta H_f$ may be determined by standard method ISO 11357-3. In some embodiments, the propylene copolymer composition may have a $\Delta H_f$ from 61.3 to 150 joules per gram (J/g). In other embodiments, the propylene copolymer composition may have a $\Delta H_f$ from 61.5 to 140.0 J/g, 61.8 to 120.0 J/g, 62.5 to 100.0 J/g, 63.0 to 90.0 J/g, 65.0 to 80.0 J/g, or 68.0 to 78.0 J/g.

A measure of the width of the chemical composition distribution of the propylene copolymer composition may include an ATREF FWHM. The ATREF FWHM may be determined by using an automated CRYSTAF-TREF instrument equipped with a heated infrared concentration detector with composition sensor where stabilization, crystallization, and elution cycles are performed. The data from the CRYSTAF-TREF instrument may result in ATREF curves, where the full width at half maximum (FWHM) may be determined. In one or more embodiments, the propylene copolymer composition may have an ATREF FWHM from 1.0 to 15.4 °C. In other embodiments, the propylene copolymer composition may have an ATREF FWHM from 2.0 to 14.0°C, 3.0 to 12.0°C, 4.0 to 10.0°C, 5.0 to 9.5°C, 5.5 to 9.0°C, 6.0 to 8.5°C, or 6.5 to 8.0°C.

3D PRINTING PROPERTIES

A measure of the tensile properties of the propylene copolymer composition may include a tensile modulus. Tensile testing may be carried out on a Z020 (Zwick/Roell, Germany) analogous to ISO 527 using a preload of 2 N, a velocity of 1 mm/min up to 0.25% elongation, a velocity of 50 mm/min for elongation > 0.25%. The tensile modulus may be determined by 3D printing of a test specimen. The test specimen may be conditioned at room temperature and 50% humidity prior to testing. The test specimen 200 may be printed by material extrusion. In one or more embodiments, the propylene copolymer composition may have a tensile modulus of at least 700 megapascals (MPa). In other embodiments, the propylene copolymer composition may have a tensile modulus of at least 720 MPa, 750 MPa, 780 MPa, or 800 MPa.

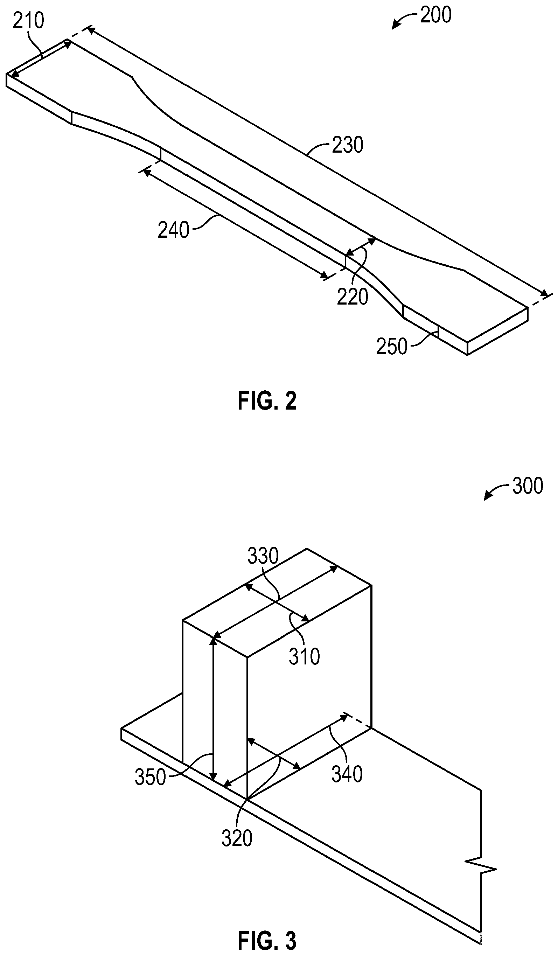

A test specimen 200 for determining the tensile modulus, according to one or more embodiments, is illustrated in FIG. 2. The test specimen 200 may be type 1BA as defined by ISO 527. The test specimen 200 may include a first width 210. The first width 210 may be 10 mm. The test specimen 200 may include a second width 220. The second width 220 may be 5 mm. The test specimen 200 may include a first length 230. The first length 230 may be 75 mm. The test specimen 200 may include a second length 240. The second length 240 may be 30 mm. The test specimen 200 may include a height 250. The height 250 may be 2 mm.

The propylene copolymer compositions according to embodiments herein have a dimensional accuracy. The dimensional accuracy may be determined by 3D printing of a test specimen. A test specimen 300 for determining dimensional accuracy, according to one or more embodiments, is illustrated in FIG. 3. The test specimen 300 may include a first length 310. The test specimen 300 may include a second length 320. The test specimen may include a first width 330. The test specimen may further include a second width 340. The test specimen may include a height 350. The test specimen 300 may be conditioned at room temperature and 50% humidity prior to testing. The test specimen 300 may be printed by material extrusion, targeting formation of a structure in which the first length 310 is 5 mm, the second length 320 is 5 mm, the first width 330 is 10 mm, the second width 340 is 10 mm, and the height 350 is 10 mm. Due to the printing process, laying down of layers of molten polymer and cooling, building the structure stepwise, as well as changes in the polymer density as it cools and solidifies, the resulting structure may not be exactly the dimensions specified. The differences in the targeted and actual dimensions may be used to provide a measure of the dimensional accuracy of the polymer.

The dimensional accuracy may be determined from a cumulative deviation. The cumulative deviation may be calculated from the following equation:

$$Cumulative\ deviation\ [\%] = \left( \frac{|L_1\text{-}5\ \text{mm}|}{5\ \text{mm}} + \frac{|L_2\text{-}5\ \text{mm}|}{5\ \text{mm}} + \frac{|W_1\text{-}10\ \text{mm}|}{10\ \text{mm}} + \frac{|W_2\text{-}10\ \text{mm}|}{10\ \text{mm}} + \frac{|H\text{-}10\ \text{mm}|}{10\ \text{mm}} \right) \times 100\%$$

$L_1$ may correspond to the first length 310. $L_2$ may correspond to the second length 320. $W_1$ may correspond to the first width 330. $W_2$ may correspond to the second width 340. H may correspond to the height 350. $L_1, L_2, W_1, W_2, H$ may be determined using a digital caliper.

The dimensional accuracy may be calculated from the cumulative deviation based on the following equation:

$$Dimensional\ accuracy\ [\%] = 100\% - (cumulative\ deviation\ [\%])/5$$

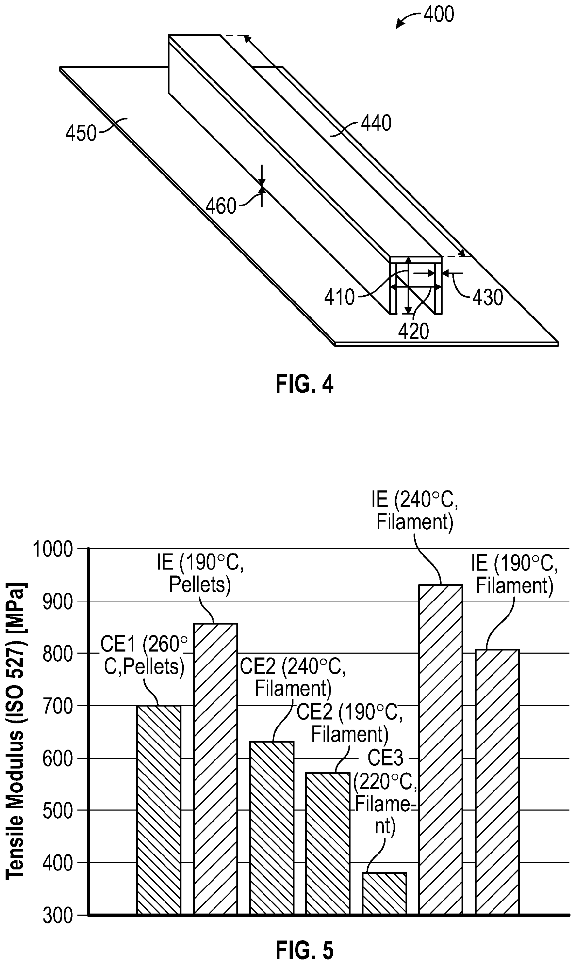

In one or more embodiments, the propylene copolymer composition may have a dimensional accuracy of at least 88.5% when 3D-printed using a die temperature of 190 °C. In other embodiments, the propylene copolymer composition may have a dimensional accuracy of at least 89.0%, 89.5%, or 89.9% when 3D-printed using a die temperature of 190 °C. In one or more embodiments, the propylene copolymer composition may have a dimensional accuracy of at least 96.0% when 3D-printed using a die temperature of 240 °C. In other embodiments, the propylene copolymer composition may have a dimensional accuracy of at least 96.5%, 97.0%, or 97.3% when 3D-printed using a die temperature of 240 °C. The propylene copolymer composition may have a relative warpage. The relative warpage may be determined by 3D printing of a test specimen. A test specimen 400 for determining relative warpage, according to one or more embodiments, is illustrated in FIG. 4. The test specimen 400 may include a height 410. The test specimen 400 may include a width 420. The test specimen 400 may further include a wall thickness 430. The test specimen 400 may be conditioned at room temperature and 50% humidity prior to testing. The test specimen 400 may be printed by material extrusion, targeting formation of a structure in which the height 410 is 10 mm, the width 420 is 10 mm, the wall thickness 430 is 2 mm, the length 440 is 80 mm, and the gap height 460 is 0 mm. Due to the printing process, laying down of layers of molten polymer and cooling, building the structure stepwise, as well as changes in the polymer density as it cools and solidifies, the resulting structure may be warped. The differences in the targeted and actual dimensions may be used to provide a measure of the relative warpage of the polymer.

Relative warpage may be calculated based on the following equation:

$$Relative\ warpage\ (\%) = {h_{warp}(mm)}\Big/{l_{warp}(mm)} \times 100\%$$

$l_{warp}$ may be determined by measuring the length 440 of the test specimen 400 in the x-direction, which may be the longest dimension using a digital caliper. $h_{warp}$ may be determined by measuring the gap height 460 between the edges of test specimen 400 at half of the length 440 (center of test specimen 400) and the flat surface 450 using feeler gauges. The propylene copolymer composition may have a relative warpage from 0 to 5%. In other embodiments, the propylene copolymer composition may have a relative warpage from 0.05 to 3%, 0.08 to 2%, 0.1 to 1%.

METHOD OF MAKING PROPYLENE COPOLYMER COMPOSITION

Embodiments of the present disclosure may relate to a method of making a propylene copolymer composition. The method may include reacting propylene and at least two $\alpha$-olefin comonomers in one or more vertically-stirred gas phase reactor to produce a propylene copolymer. The method may then include extruding the propylene copolymer with additives and visbreaking to produce a propylene copolymer composition. The propylene copolymer composition may have a MFR in a range from 5.4 to 250 grams per 10 minutes (g/10 min). The propylene copolymer composition may have a PI in a range from 1.0 to 3.7. The propylene copolymer composition may have an enthalpy of fusion ($\Delta H_f$) from 61.3 to 150 J/g. The propylene copolymer composition may have an ATREF FWHM from 1.0 to 15.4 °C. The propylene copolymer composition may have a tensile modulus of at least 700 MPa. The propylene copolymer composition may have a dimensional accuracy of at least 88.5% when 3D-printed using a die temperature of 190 °C. The propylene copolymer composition may further have a relative warpage from 0 to 5%.

Reacting the propylene and at least two $\alpha$-olefin comonomers in one or more vertically-stirred gas phase reactor may include use of any known isospecific catalyst for the polymerization of $\alpha$-olefins. In one or more embodiments, the catalyst may include an isospecific Ziegler-Natta catalyst. In other embodiments, the catalyst may include an isospecific supported Ziegler-Natta catalyst containing an internal donor. The support may include $SiO_2$-$MgCl_2$, $MgCl_2$, or $MgCl_2$-nROH. The internal donor may include diisobutyl phthalate (DIBP), 2-isopropyl-2-isopentyl-1,3-dimethoxypropane (I3I5), dibutyl succinate (DBS), diethyl cyclohexyl succinate (DECS), diethyl-2-ethyl-2-methyl succinate (DEEMS), or 5-tert-butyl-3-methyl-1,2-phenylene dibenzoate (BMPD).

According to embodiments of the present disclosure, the catalyst may include an isospecific Ziegler-Natta catalyst in the presence of any known silane. The silane may include cyclohexylmethyl-dimethoxysilane, isobutyl (isopropyl)-dimethoxysilane, dicyclopentyl-dimethoxysilane, diisopropyl-dimethoxysilane, diisobutyl-dimethoxysilane, diphenyl-dimethoxysilane, diethylamino-triethoxysilane, and combinations thereof.

Visbreaking the propylene copolymer may include any method of visbreaking known in the art. According to one or more embodiments, visbreaking may be performed using a peroxide. The peroxide may include di-tert-butyl peroxide, 2,5-dimethyl-2,5-di(tert-butylperoxy) hexane, or 3,6,9-triethyl-3,6,9-trimethyl-1,4,7-triperoxonane.

Extruding the propylene copolymer may include any method of extruding known in the art. According to one or more embodiments, extruding may be performed using a twin-screw extruder. Extruding may include addition of one or more additives. The one or more additives may be selected from a group of stabilizers, acid scavengers, nucleating agents, antistatic agents, slip agents, antiblocking agents, and combinations thereof.

Embodiments of the present disclosure may include a method of making a propylene copolymer composition where the propylene copolymer composition may have an melt mass-flow rate (MFR). The melt mass-flow rate may be determined in accordance with standard method ISO 1133 at 230 °C and a load of 2.16 kg. In some embodiments, the propylene copolymer composition may have a MFR in a range from 5.4 to 250 grams per 10 minutes (g/10 min). In other embodiments, the propylene copolymer composition may have a MFR in a range from 5.5 to 200 g/10 min, 6.0 to 180 g/lOmin, 7.0 to 150 g/lOmin, 8.0 to 120 g/10 min, 10 to 100 g/10 min, 16 to 90 g/10 min, 21 to 75 g/10 min, 30 to 60 g/10 min, or 35 to 43 g/10 min.

Embodiments of the present disclosure may include a method of making a propylene copolymer composition where the propylene copolymer composition may have a polydispersity index (PI). The PI may be correlated to the molecular weight distribution of the propylene copolymer composition. In the present description and the following claims, the PI may be determined as follows. Rheological oscillatory frequency sweep experiments may be performed on compression-molded disks using a parallel-plate geometry at 210 °C, oscillatory strain amplitude $\gamma_0$ = 10%, angular frequency $\omega$ = 389 to 0.1 rad/s, and a DHR-2 rheometer (TA Instruments, New Castle, USA). The storage modulus G' and loss modulus G" data may be analyzed by performing a least squares polynomial fit: $\ln(G') = a_2 \times [\ln(G")]^2 + a_1 \times \ln(G") + a_0$. The cross-over modulus Gc may be calculated from the fit parameters by:

$$G_C = exp\left[\frac{1 - a_1 + \sqrt{(a_1 - 1)^2 - 4a_2 a_0}}{2a_2}\right]$$

The PI may be calculated from the calculated cross-over modulus Gc:

$$PI = \frac{10^5 Pa}{G_C}$$

In some embodiments, the propylene copolymer composition may have a PI in a range from 1.0 to 3.7. In other embodiments, the propylene copolymer composition may have a PI in a range from 1.2 to 3.6, 1.5 to 3.4, 1.7 to 3.0, 1.8 to 2.7, or 1.9 to 2.5.

Embodiments of the present disclosure may include a method of making a propylene copolymer composition where the propylene copolymer composition may have an enthalpy of fusion ($\Delta H_f$). The $\Delta H_f$ may be determined by standard method ISO 11357-3. In some embodiments, the propylene copolymer composition may have a $\Delta H_f$ from 61.3 to 150 joules per gram (J/g). In other embodiments, the propylene copolymer composition may have a $\Delta H_f$ from 61.5 to 140.0 J/g, 61.8 to 120.0 J/g, 62.5 to 100.0 J/g, 63.0 to 90.0 J/g, 65.0 to 80.0 J/g, or 68.0 to 78.0 J/g.

Embodiments of the present disclosure may include a method of making a propylene copolymer composition where the propylene copolymer composition may have an analytical temperature rising elution fractionation full width half maximum (ATREF FWHM). The ATREF FWHM may be determined using an automated CRYSTAF-TREF instrument equipped with a heated infrared concentration detector with composition sensor where stabilization, crystallization, and elution cycles were performed. The data from the CRYSTAF-TREF instrument may result in ATREF curves, where the full width at half maximum (FWHM) may be determined. The resulting ATREF FWHM may be a measure of the width of the chemical composition distribution of the propylene copolymer composition. In one or more embodiments, the ATREF FWHM may be in a range from 1.0 to 15.4 °C. In other embodiments, the ATREF FWHM may be in a range from 2.0 to 14.0 °C, 3.0 to 12.0 °C, 4.0 to 10.0 °C, 5.0 to 9.5 °C, 5.5 to 9.0°C, 6.0 to 8.5°C, or 6.5 to 8.0 °C.

Embodiments of the present disclosure may include a method of making a propylene copolymer composition where the propylene copolymer composition may have a tensile modulus. Tensile testing may be carried out on a Z020 (Zwick/Roell, Germany) following the procedures described in ISO 527 using a preload of 2 N, a velocity of 1 mm/min up to 0.25% elongation, a velocity of 50 mm/min for elongation > 0.25%. The tensile modulus may be determined by 3D printing of a test specimen. The test specimen may be conditioned at room temperature and 50% humidity prior to testing. In some embodiments, the propylene copolymer composition may have a tensile modulus of at least 700 megapascals (MPa). In other embodiments, the propylene copolymer composition may have a tensile modulus of at least 720 MPa, 750 MPa, 780 MPa, or 800 MPa.

Embodiments of the present disclosure may include a method of making a propylene copolymer composition where the propylene copolymer composition may have a dimensional accuracy. The dimensional accuracy may be determined by 3D printing of a test specimen. In some embodiments, the propylene copolymer composition may have a dimensional accuracy of at least 88.5% when 3D-printed using a die temperature of 190 °C. In other embodiments, the propylene copolymer composition may have a dimensional accuracy of at least 89.0%, 89.5%, or 89.9% when 3D-printed using a die temperature of 190 °C. In some embodiments, the propylene copolymer composition may have a dimensional accuracy of at least 96.0% when 3D-printed using a die temperature of 240 °C. In other embodiments, the propylene copolymer composition may have a dimensional accuracy of at least 96.5%, 97.0%, or 97.3% when 3D-printed using a die temperature of 240 °C.

Embodiments of the present disclosure may include a method of making a propylene copolymer composition where the propylene copolymer composition may have a relative warpage. Relative warpage may be determined by 3D printing of a test specimen. In some embodiments, the propylene copolymer composition may have a relative warpage from 0 to 5%. In other embodiments, the propylene copolymer composition may have a relative In other embodiments, the propylene copolymer composition may have a relative warpage from 0.05 to 3%, 0.08 to 2%, 0.1 to 1%.

METHOD OF MAKING A 3D ARTICLE

Embodiments of the present disclosure may include a method of making a 3D article from the above-described propylene copolymer compositions. The method may include melting the propylene copolymer composition. The resulting melted composition is then deposited onto a surface using a die. The method further includes forming 3D articles by moving the die and/or the surface relative to each other in *xyz* space. The 3D article may be formed using various 3D printing systems, such as fused filament fabrication (FFF), Arburg Plastic Freeforming (APF), and selective laser sintering (SLS).

The propylene copolymer composition may be in the form of a filament, pellets, or flakes, as appropriate for the respective printing system. The filament, pellets or flakes may be fed to an extruder, which may include a heater block. The energy provided by the heater block and extruder may melt the propylene copolymer composition, increasing the temperature of the propylene copolymer composition above a melting temperature of the propylene copolymer composition. The energy provided may also be used to increase a temperature of the polymer melt to a desired extrusion temperature, or die temperature, the temperature at which the polymer melt is forced through a die of the print head and deposited onto the print surface. Die temperatures useful with propylene copolymer compositions herein may include temperatures in a range from about 150 °C to 280 °C, for example.

The melted composition is then deposited onto a surface using a die. The melting and depositing of the melted composition may be performed, for example, using a single screw extruder equipped with a melt pump and a die. The die may have a diameter of 0.04 to 2 mm. Following deposition of the polymer onto the surface, cooling and solidifying of the propylene copolymer composition may be performed to provide the final printed product.

According to one or more embodiments, the surface may include a print bed. The print bed may be heated in some embodiments, and may be operated at a temperature, for example, in a range from room temperature up to a maximum temperature of about 150 °C. The print bed temperature should be less than a melting temperature of the propylene copolymer composition, thus providing for cooling and solidifying of the melt into the desired 3D object. The print bed may have printing dimensions (*x, y, z*) of 300 mm × 200 mm × 260 mm in some embodiments, although larger or smaller print beds may be used. The print beds may be made from PEI, for example.

Embodiments of the present disclosure may include forming 3D articles by moving the die and/or the surface relative to each other in *xyz* space and depositing a propylene copolymer composition. Moving may include the propylene copolymer extrudate being placed in the correct *xyz* position as required for forming of the 3D article. The shape of the deposited propylene copolymer composition may include droplets, strands, rods, or disks. The propylene copolymer composition may be deposited in a pattern to form layers. Forming 3D articles may include the deposition of multiple layers of a propylene copolymer composition.

3D Printing of polymers, as noted above, has challenges associated with changes in shape and dimensions during the cooling and solidifying of the polymer following extrusion and deposition onto the printing surface. However, propylene copolymer compositions according to embodiments herein have been found to overcome some or all of these challenges, as detailed in the Examples below.

Embodiments of the present disclosure may provide at least one of the following advantages. The propylene copolymer composition may provide higher dimensional accuracy and higher tensile modulus at similar low relative warpage compared to state-of-the-art composition. The improvement of these attributes may be due to employing compositions of copolymers of propylene and at least two $\alpha$-olefin comonomers and additives with higher melt flow rates, narrower molecular weight distributions (PI), narrower chemical composition distributions (ATREF FWHM), and higher crystallinities ($\Delta H_f$) than state-of-the-art compositions. A composition of lower average molecular weight (higher melt flow rate) may not be expected to show superior processing behaviors as seen in compositions with low relative warpage and high dimensional accuracy. Prior art teaches that materials of lower crystallinity may show better processing behavior such as less relative warpage and higher dimensional accuracy. Thus, it may not be expected or predicted that materials of higher crystallinity exhibit superior processing behaviors.

Prior art is silent about the influence of the width of the molecular weight distribution (PI) and chemical composition distribution (ATREF FWHM) on the properties of 3D printed articles. For other applications, such as heat sealing layers, broad molecular weight distribution (PI) and broad chemical composition distribution (ATREF FWHM) are known to be advantageous. Embodiments of the current disclosure report PI values as evidence of narrower molecular weight distributions. Embodiments of the current disclosure also report ATREF FWHM values as evidence of narrower chemical composition distributions. The composition described herein may be advantageous for 3D printing as the reported PI and ATREF FWHM values correlate to 3D printed articles with low relative warpage and high dimensional accuracy.

Embodiments according to the present disclosure may be especially beneficial for 3D printing by material extrusion, and may be used in the form of pellets, powders, or filaments. The compositions described herein may be successfully printed at temperatures below 200 °C, which enables their use on a wide range of consumer 3D printers with low maximum print head temperatures.

EXAMPLES

In Table 1, material parameters for all comparative and inventive examples are summarized. Comparative example CE1 is a commercial copolymer of propylene, ethylene, and 1-butylene (Adsyl 5C30F, LyondellBasell, USA). Comparative example CE2 is a 3D printing filament (Innofil3D PP Natural, *d* = 1.75 mm, BASF 3D Printing Solutions, Germany) based on a copolymer of propylene, ethylene, and 1-butylene. CE3 is a 3D printing filament (PP Transparent, *d*

= 1.75 mm, Verbatim Europe, Germany) based on a copolymer of propylene and ethylene. Inventive example IE was prepared by synthesizing a copolymer of propylene, ethylene, and 1-butylene in a single vertically-stirred gas phase reactor (Novolen type) at 26 barg and 75 °C using an isospecific $SiO_2$-$MgCl_2$ supported Ziegler-Natta catalyst containing diisobutyl phthalate (DIBP) as internal donor. External donor (cyclohexylmethyl-dimethoxysilane) was fed to the reactor to control the incorporation of comonomers and to increase isospecificity of the catalyst. Hydrogen was fed to the reactor to control polymer molecular weight and the feed rate was adjusted to achieve a MFR (ISO 1133, 230°C, 2.16 kg) of about 1 g/10 min. The obtained powder was extruded on a twin-screw extruder with 650 ppm Irganox 1010 (BASF SE, Germany), 1350 ppm Irgafos 168 (BASF SE, Germany), and 500 ppm DHT-4A (Kisuma Chemicals B.V., Netherlands) with respect to the total composition. During extrusion, the polymer was visbroken using a peroxide to achieve a MFR (ISO 1133, 230 °C, 2.16 kg) of about 43 g/10 min.

Melt mass-flow rates (MFR) were determined according to ISO 1133 at 230 °C and a load of 2.16 kg. Peak melting temperatures $T_{pm}$ and enthalpies of fusion $\Delta H_f$ were determined according to ISO 11357-3. The heating and cooling protocol was as follows: [1] 0 to 200 °C at +20 K/min, [2] 200 °C for 5 min, [3] 200 to 0 °C, at -20 K/min, [4] 0 °C for 5 min, [5] 0 to 200 °C at +20 K/min. For the peak melting temperatures $T_{pm}$ and enthalpies of fusion $\Delta H_f$, the second heating cycle (step [5]) was evaluated. "Ethylene content" ($C_2$) refers to the fraction in wt% of $-CH_2-CH_2-$ units in the polymers derived from the polymerization of ethylene. "Butylene content" ($C_4$) refers to the fraction in wt% of $-CH_2-C_3H_6-$ units in the polymers derived from the polymerization of 1-butylene. Total comonomer content refers to the sum of all comonomer contents in wt%. Ethylene ($C_2$) and 1-butylene ($C_4$) contents were determined by Fourier Transform Infrared (FTIR) spectroscopy on $200 \pm 50$ μm films using a Tensor 27 FTIR spectrometer (Bruker Corp., USA). The films were prepared using a hot press at 200 °C and 50 bar, and the spectral absorption was corrected for actual film thickness. The FTIR spectra were acquired in the mid infrared region of 4000 - 400 $cm^{-1}$ and the bands between 900 - 600 $cm^{-1}$ were evaluated using a partial least-squares (PLS) algorithm in comparison to spectra of reference samples that were calibrated by $^{13}C$ NMR (Haaland et al. Anal. Chem. 1988, 60, 1193-1202). Rheological oscillatory frequency sweep experiments were performed on compression-molded disks using a parallel-plate geometry at 210 °C, oscillatory strain amplitude $\gamma_0$ = 10%, angular frequency $\omega$ = 389 to 0.1 rad/s, and a DHR-2 rheometer (TA Instruments, New Castle, USA). The storage modulus G' and loss modulus G'' data was analyzed by performing a least squares polynomial fit: $\ln(G') = a_2 \times [\ln(G'')]^2 + a_1 \times \ln(G'') + a_0$. The cross-over modulus $G_C$ was calculated from the fit parameters by:

$$G_C = \exp\left[\frac{1 - a_1 + \sqrt{(a_1-1)^2 - 4a_2 a_0}}{2a_2}\right] \quad (1)$$

As measures of the width of the molecular weight distribution, several rheological parameters were calculated. *PI* is linked to the dispersity index $M_w/M_n$, *PDR* provides a measure of the strength of shear-thinning, and *ER* relates to the width of the high molecular weight side of the molecular weight distribution.

$$PI = \frac{10^5 \text{Pa}}{G_c} \quad (2)$$

$$PDR = \frac{|\eta_1^*|}{|\eta_3^*|} \frac{[|\eta_1^*| \times |\eta_3^*|]^{0.5}}{|\eta_2^*|} \quad (3)$$

with $|\eta_1^*| = |\eta^*|$ at $|G^*|$ = 500 Pa, $|\eta_2^*| = |\eta^*|$ at $|G^*|$ = 5,000 Pa, $|\eta_3^*| = |\eta^*|$ at $|G^*|$ = 50,000 Pa. All $|\eta^*|$ values in "Poises".

$$ER = \frac{1.781}{100 \text{ Pa}} \times G'_{ER} \quad (4)$$

with $G'_{ER}$ = G' at G'' = 500 Pa

To determine the width of the chemical composition distribution, analytical temperature rising elution fractionation (ATREF) was performed using an automated CRYSTAF-TREF instrument (PolymerChar S.A., Spain), equipped with a heated infrared (IR) concentration detector with composition sensor, and a capillary viscometer detector. Polymer solutions were prepared at a concentration of $3 \pm 0.25$ mg/mL in 1,2-dichlorobenzene (stabilized with 500 ppm 2,6-di-tert-butyl-4-methylphenol) at 150 °C for 90 minutes. After dissolution was completed, the sample was transferred to the ATREF column where the stabilization, crystallization and elution cycles were performed. During stabilization, the column was cooled down from 150 to 95° C at -40 °C/min and then kept at 95 °C for 45 min. The crystallization step was carried out by cooling down from 95 °C to 35 °C at a cooling rate of -0.5 °C/min. At the end of the crystallization step, the column was kept at 35 °C for 10 minutes. Subsequently, the content of the column was eluted for 10 minutes to collect the soluble fraction. The elution step was carried out by heating from 35 to 140 °C at a heating rate of +1 °C/min, while maintaining a constant solvent flow rate of 0.5 mL/min. The obtained ATREF data in the range from 35 to 140 °C (excluding the soluble fraction) were divided by the respective maximum signal intensities to obtain rescaled data. As a measure of the width of the chemical composition distribution, full width at half maximum (FWHM) was determined by calculating the temperature difference between the two points of the ATREF curve for which the rescaled signal intensity was 0.5 in each case.

**Table 1:** Analytical parameters of different propylene polymer compositions. (*) Comparative examples. (†) Inventive example.

| Example | MFR [g/ 10 min] | $T_{pm}$ [°C] | $\Delta H_f$ [J/g] | ATREF FWHM [°C] | $C_2$ [wt%] | $C_4$ [wt%] | Total Comonomer Content [wt%] | PI [-] | PDR [-] | ER [-] |
|---|---|---|---|---|---|---|---|---|---|---|
| CE1* | 5.3 | 131 | 54.5 | 20.7 | 3.5 | 7.6 | 11.1 | 3.8 | 15.4 | 1.2 |
| CE2* | 5.1 | 130 | 61.2 | 15.5 | 1.7 | 12.2 | 13.9 | 4.0 | 16.6 | 1.1 |
| CE3* | 22 | 128 | 41.5 | 4.9 | 5.1 | 0.0 | 5.1 | 1.8 | 5.3 | 0.5 |
| IE1† | 43 | 136 | 77.0 | 6.9 | 2.3 | 6.9 | 9.2 | 1.9 | 4.8 | 0.4 |

Arburg Plastic Freeforming (APF) 3D-printing tests were carried out on a Freeformer 200-3X 3D printer (Arburg GmbH + Co KG, Germany) with a max. build volume temperature of 120 °C, max. processing temperature of 350 °C, and max. printing dimensions (x, y, z) of 189 mm × 134 mm × 230 mm. The Arburg Freeformer technology is based on a high frequency nozzle closure that discharges droplets of molten polymer onto a moving part carrier. Process parameters for the tests are summarized in Table 2. Process conditions (temperatures, throughput, etc.) were optimized to achieve best printing performance as recommended by the instrument supplier for the qualification of new materials.

**Table 2:** Processing parameters for Arburg Plastic Freeforming (APF) 3D-printing tests using selected inventive and comparative examples of Table 1. (*) Comparative examples. (†) Inventive example.

| Parameter | Unit | CE1* | IE1† |
|---|---|---|---|
| Scaling factor X | [-] | 1.0078 | 1.0139 |
| Scaling factor Y | [-] | 1.0061 | 1.0139 |
| Scaling factor Z | [-] | 1.0168 | 1.0055 |
| Feed rate fast mode | [mm/s] | 250 | 250 |
| Feed rate continuous extrusion | [mm/s] | 65 | 65 |
| Feed rate discrete extrusion | [mm/s] | 20 | 20 |
| Form factor droplets | [-] | 1.53 | 1.28 |
| Number edge contours | [-] | 2 | 2 |
| Overlap | [%] | 50 | 50 |
| Starting angle | [°] | 45 | 45 |
| Increment angle | [°] | 90 | 90 |
| Die diameter | [mm] | 0.2 | 0.2 |
| Fill density | [%] | 100 | 100 |
| Droplet rate | [Hz] | 143 | 143 |
| Dosing number | [-] | 100 | 60 |
| Temperature build volume | [°C] | 80 | 80 |
| Temperature die | [°C] | 260 | 190 |

The inventive example IE of Table 1 was extruded into filaments of d = 1.75 ± 0.05 mm using an FT-E 20 single-screw extruder (Collin Lab Solution & Pilot GmbH, Germany) equipped with a melt pump and a 2 mm die. The extruded strand was cooled using a water bath at room temperature and subsequently dried using air. The material diameter was monitored using a Sikora 2050 T gauge head (Sikora, Germany) and collected using a haul-off / winder system (Collin Lab Solution & Pilot GmbH, Germany). Fused filament fabrication (FFF) 3D-printing tests were carried out on a Triple F Mini 3D printer (SKZ KFE gGmbH, Germany) with a maximum print bed temperature of 150 °C, maximum processing temperature of 395 °C, and maximum printing dimensions (x, y, z) of 300 mm × 200 mm × 260 mm. Process parameters for the tests are summarized in Table 3.

**Table 3:** Processing parameters for fused filament fabrication (FFF) 3D-printing tests using selected inventive and comparative examples of Table 1. (*) Comparative examples. (†) Inventive example.

| Parameter | Unit | CE2* | CE3* | IE1† |
|---|---|---|---|---|
| Number of outer layers | [-] | 2 | 2 | 2 |
| Number of top layers | [-] | 3 | 3 | 3 |
| Number of bottom layers | [-] | 3 | 3 | 3 |
| Fill density | [%] | 100 | 100 | 100 |
| Pattern | [-] | ±45° | ±45° | ±45° |
| Die diameter | [mm] | 0.4 | 0.4 | 0.4 |
| Max. print velocity perimeter | [mm/s] | 15 | 15 | 15 |
| Max. print velocity top/bottom | [mm/s] | 30 | 30 | 30 |
| Max. print velocity infill | [mm/s] | 24 | 24 | 24 |
| Flow | [%] | 100 | 100 | 100 |
| Temperature print bed | [°C] | 80 | 80 | 80 |
| Temperature die | [°C] | 190, 240 | 220 | 190, 240 |

**Test Specimen**

Different test specimen were printed to determine the performance of selected comparative and inventive examples of Table 1 in 3D printing by material extrusion. In FIG. 3, a test specimen is shown that was employed to quantify dimensional accuracy. The cumulative deviation from the desired dimensions was determined based on Equation 5, and the dimensional accuracy was calculated using Equation 6.

$$Cumulative\ deviation\ [\%] = \left(\frac{|L_1\text{-}5\ \text{mm}|}{5\ \text{mm}} + \frac{|L_2\text{-}5\ \text{mm}|}{5\ \text{mm}} + \frac{|W_1\text{-}10\ \text{mm}|}{10\ \text{mm}} + \frac{|W_2\text{-}10\ \text{mm}|}{10\ \text{mm}} + \frac{|H\text{-}10\ \text{mm}|}{10\ \text{mm}}\right) \times 100\% \quad (5)$$

$$Dimensional\ accuracy\ [\%] = 100\% - (cumulative\ deviation\ [\%])/5 \quad (6)$$

Test specimen are shown that were employed to quantify the degree of warpage (FIG. 4) and to determine the mechanical properties (FIG. 2) of 3D-printed specimen from selected inventive and comparative examples of Table 1. Absolute warpage was determined by measuring the gap height $h_{warp}$ in z-direction between the printed specimen (upside down) and the build platform. Relative warpage was calculated based on Equation 7 with $l_{warp}$ being the actual length of the specimen in x-direction (longest dimension).

$$Relative\ warpage\ [\%] = h_{warp}[\text{mm}]/l_{warp}\ [\text{mm}] \times 100\% \quad (7)$$

Mechanical properties of selected inventive and comparative examples of Table 1 were determined by analyzing 3D-printed test specimen of type 1BA as defined by ISO 527 (FIG. 2). Tensile testing was carried out on a Z020 (Zwick/Roell, Germany) analogous to ISO 527 using a preload of 2 N, a velocity of 1 mm/min up to 0.25% elongation, a velocity of 50 mm/min for elongation > 0.25%. All test specimens were conditioned at room temperature and 50% humidity prior to testing.

In Tables 4 and 5, results from tests on tensile strength, dimensional accuracy, and relative warpage for selected inventive and comparative examples of Table 1 are summarized. The inventive example IE1 showed the highest tensile modulus $E_t$ compared to state-of-the-art compositions. This enables the use of the inventive compositions in applications where high stiffness is required (e.g., automotive / aerospace). Surprisingly, using the inventive example IE1 resulted in a higher dimensional accuracy despite the higher *MFR* (lower average molecular weight) and higher crystallinity as characterized by a higher enthalpy of fusion $\Delta H_f$ compared to using state-of-the-art compositions. This is especially beneficial for complex and functional parts with high demands on dimensional accuracy. Despite the higher crystallinity as characterized by the higher enthalpy of fusion $\Delta H_f$, specimen based on the inventive example IE1 had a similar relative warpage compared to state-of-the-art compositions. This was unexpected as prior art teaches that warpage correlates with the degree of crystallinity.

**Table 4:** Tensile test results, dimensional accuracy results, warpage results from Arburg Plastic Freeforming (APF) 3D-printing tests on selected inventive and comparative examples of Table 1. (*) Comparative example, (†) Inventive example.

| Example | Die Temp. [°C] | Tensile Modulus [MPa] | Dimensional accuracy [%] | Relative warpage [%] |
|---------|---------------|-----------------------|--------------------------|----------------------|
| CE1* | 260 | 697 | 95.1 | 0.51 |
| IE1† | 190 | 857 | 98.8 | 0.50 |

**Table 5:** Tensile test results, dimensional accuracy results, warpage results from fused filament fabrication (FFF) 3D-printing tests on selected inventive and comparative examples of Table 1. (*) Comparative examples. (†) Inventive example.

| Example | Die Temp. [°C] | Tensile Modulus [MPa] | Dimensional accuracy [%] | Relative warpage [%] |
|---------|---------------|-----------------------|--------------------------|----------------------|
| CE2* | 240 | 630 | 95.9 | 0.25 |
| CE2* | 190 | 570 | 88.1 | 0.13 |
| CE3* | 220 | 379 | 94.7 | 0.25 |
| IE1† | 240 | 930 | 97.3 | 0.25 |
| IE1† | 190 | 806 | 89.9 | 0.13 |

FIG. 5 is a bar chart comparing tensile modulus of the inventive example (IE1) to the comparative examples (CE1, CE2, CE3).

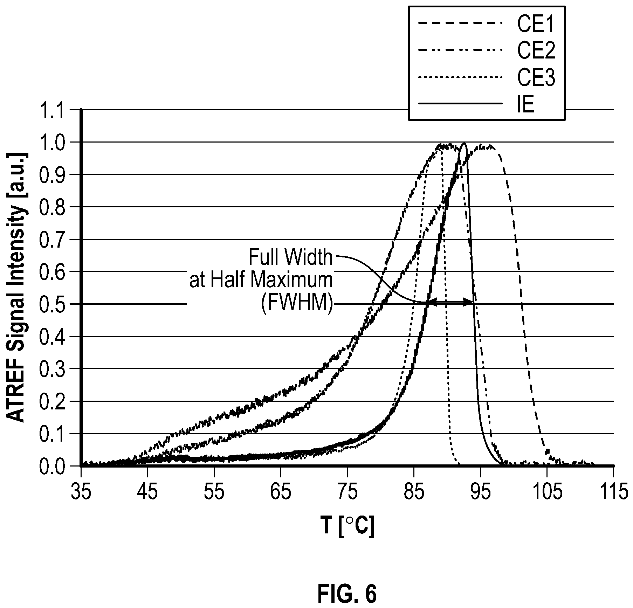

FIG. 6 is a graph comparing ATREF FWHM of the inventive example (IE1) to the comparative examples (CE1, CE2, CE3).

Although only a few example embodiments have been described in detail above, those skilled in the art will readily appreciate that many modifications are possible in the example embodiments without materially departing from this invention. Accordingly, all such modifications are intended to be included within the scope of this disclosure as defined in the following claims.

**Claims**

**1.** A propylene copolymer composition comprising:

a propylene copolymer comprising:

propylene in a range from 70 to 95 wt%; and
at least two $\alpha$-olefin comonomers in a range from 3.0 to 25 wt%,
wherein the at least two $\alpha$-olefin comonomers are selected from a group consisting of ethylene, 1-butylene, 1-pentene, 1-hexene, 1-heptene, and 1-octene, and wherein the comonomer with a lower molar mass is in a range from 0.3 to 10 wt%;

wherein the propylene copolymer composition has a melt flow rate (MFR) in a range from 5.4 to 250 g/10 min, a polydispersity index (PI) in a range from 1.0 to 3.7, an analytical temperature rising elution fractionation full width at half maximum (ATREF FWHM) in a range from 1.0 to 15.4 °C, and a dimensional accuracy of at least 88.5% when 3D-printed using a die temperature of 190 °C.

2. The composition of claim 1, wherein the at least two $\alpha$-olefin comonomers are ethylene and 1-butylene.

3. The composition of any of claims 1 to 2, further comprising from 0.01 to 5 wt% of one or more additives selected from a group of stabilizers, acid scavengers, nucleating agents, antistatic agents, slip agents, antiblocking agents, and combinations thereof.

4. The composition of any of claims 1 to 3, wherein the propylene copolymer composition has an enthalpy of fusion $\Delta H_f$ from 61.3 to 150 J/g.

5. The composition of any of claims 1 to 4, wherein the propylene copolymer composition has a tensile modulus of at least 700 MPa.

6. A three-dimensional printed article comprising the composition of any of claims 1 to 5.

7. A method of making a propylene copolymer composition, the method comprising:

   reacting propylene and at least two $\alpha$-olefin comonomers in one or more vertically-stirred gas phase reactors to produce a propylene copolymer; and
   extruding the propylene copolymer with additives and optionally visbreaking to produce a propylene copolymer composition;
   wherein the propylene copolymer composition has a melt flow rate (MFR) in a range from 5.4 to 250 g/10 min, a polydispersity index (PI) in a range from 1.0 to 3.7, an analytical temperature rising elution fractionation full width at half maximum (ATREF FWHM) in a range from 1.0 to 15.4 °C, and a dimensional accuracy of at least 88.5% when 3D-printed using a die temperature of 190 °C.

8. The method of claim 7, wherein reacting the propylene and at least two $\alpha$-olefin comonomers comprises reacting with a Ziegler-Natta catalyst, an internal donor, and an external donor.

9. The method of claim 8, wherein the Ziegler-Natta catalyst comprises an isospecific supported Ziegler-Natta catalyst containing diisobutyl phthalate (DIBP) as an internal donor.

10. The method of claim 8, where the external donor comprises a silane selected from a group of cyclohexylmethyl-dimethoxysilane, isobutyl (isopropyl)-dimethoxysilane, dicyclopentyl-dimethoxysilane, diisopropyl-dimethoxysilane, diisobutyl-dimethoxysilane, diphenyl-dimethoxysilane, diethylamino-triethoxysilane, and combinations thereof.

11. The method of any of claims 7 to 10, wherein extruding the propylene copolymer composition and optionally visbreaking comprises visbreaking with a peroxide.

12. The method of any of claims 7 to 11, wherein the propylene copolymer composition has an enthalpy of fusion $\Delta H_f$ from 61.3 to 150 J/g.

13. The method of any of claims 7 to 12, wherein the propylene copolymer composition has a tensile modulus of at least 700 MPa.

14. A method of making a three-dimensional article, the method comprising:

   melting the composition of any of claims 1 to 5 to form a melted composition;
   depositing the melted composition onto a surface using a die; and
   forming three-dimensional articles by moving the die and/or the surface relative to each other in *xyz* space.

**FIG. 1**

**FIG. 2**

**FIG. 3**

**FIG. 4**

**FIG. 5**

FIG. 6

Europäisches
Patentamt

European
Patent Office

Office européen
des brevets

# EUROPEAN SEARCH REPORT

**Application Number**

EP 23 18 6527

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2022/261362 A1 (GRACE W R & CO [US]) 15 December 2022 (2022-12-15) <br> * paragraph [0009] - paragraph [0012] * <br> * paragraph [0035] - paragraphs [0036], [0039] * <br> * paragraph [0040] * <br> * paragraph [0047] - paragraph [0051] * <br> * paragraph [0106] - paragraph [0123] * <br> * Sample #12; examples * | 1-14 | INV. <br> C08F210/06 <br> C08F8/50 <br> B33Y10/00 <br> B33Y70/00 <br> B29C64/118 <br> B33Y80/00 |
| A | US 2019/127890 A1 (DE PALO ROBERTO [IT] ET AL) 2 May 2019 (2019-05-02) <br> * paragraph [0044]; examples; table 1; compound PP3 * <br> * claims 1-6,11,13-15 * | 1-14 | |
| A | DATABASE WPI <br> Week 2022073 <br> Thomson Scientific, London, GB; <br> AN 2022-85109J <br> XP002810757, <br> -& CN 114 634 674 A (WANHUA CHEM GROUP CO LTD) 17 June 2022 (2022-06-17) <br> * abstract * <br> * paragraph [0019] * <br> * examples; tables 1-3 * <br> * claims 1,2,7,9 * | 1-14 | TECHNICAL FIELDS SEARCHED (IPC) <br><br> B29C <br> B33Y <br> C08F |

The present search report has been drawn up for all claims

| Place of search | Date of completion of the search | Examiner |
|---|---|---|
| Munich | 20 December 2023 | Russell, Graham |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 18 6527**

This annex lists the patent family members relating to the patent documents cited in the above-mentioned European search report.
The members are as contained in the European Patent Office EDP file on
The European Patent Office is in no way liable for these particulars which are merely given for the purpose of information.

**20-12-2023**

| Patent document cited in search report | Publication date | Patent family member(s) | | Publication date |
|---|---|---|---|---|
| WO 2022261362 A1 | 15-12-2022 | CA | 3222126 A1 | 15-12-2022 |
| | | WO | 2022261362 A1 | 15-12-2022 |
| US 2019127890 A1 | 02-05-2019 | BR | 112018070068 A2 | 12-02-2019 |
| | | CN | 109071724 A | 21-12-2018 |
| | | EP | 3445792 A1 | 27-02-2019 |
| | | JP | 6626990 B2 | 25-12-2019 |
| | | JP | 2019513912 A | 30-05-2019 |
| | | KR | 20180127655 A | 29-11-2018 |
| | | US | 2019127890 A1 | 02-05-2019 |
| | | WO | 2017182211 A1 | 26-10-2017 |
| CN 114634674 A | 17-06-2022 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5648450 A
- EP 2739460 A
- CN 103980402
- CN 103497414

- GB 2515348 A
- CN 104211876
- CN 104031316
- US 20120070619 A

**Non-patent literature cited in the description**

- **HAALAND et al.** *Anal. Chem.*, 1988, vol. 60, 1193-1202